(19) Europäisches Patentamt
European Patent Office
Office européen des brevets

(11) **EP 1 259 060 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(51) Int Cl.:
***B41J 2/45*** *(2006.01)*     ***H04N 1/053*** *(2006.01)*

(21) Anmeldenummer: **02009280.5**

(22) Anmeldetag: **29.04.2002**

(54) **Bebilderungseinrichtung zur Erzeugung einer Anzahl von Bildpunkten in einer Projektionslinie**

Imaging device for generating a number of image points in a projection line

Dispositif d'imagerie pour générer un nombre de points d'image dans une ligne de projection

(84) Benannte Vertragsstaaten:
**AT BE CH CY DE DK ES FI FR GB GR IE IT LI LU MC NL PT SE TR**

(30) Priorität: **18.05.2001 DE 10124215**

(43) Veröffentlichungstag der Anmeldung:
**20.11.2002 Patentblatt 2002/47**

(73) Patentinhaber: **Heidelberger Druckmaschinen Aktiengesellschaft**
**69115 Heidelberg (DE)**

(72) Erfinder:
• **Albrecht, Uwe**
**24229 Schwedeneck (DE)**
• **Beier, Bernard, Dr.**
**68526 Ladenburg (DE)**
• **Ernst, Uwe**
**68163 Mannheim (DE)**
• **Goos, Peter**
**24248 Mönkeberg (DE)**
• **Rupprecht, Andreas**
**69256 Mauer (DE)**
• **Vosseler, Bernd**
**69120 Heidelberg (DE)**

(56) Entgegenhaltungen:
**EP-A- 0 684 133    DE-A1- 19 602 307**
**DE-U1- 9 302 494    US-A- 4 571 602**
**US-A- 6 035 076    US-B1- 6 201 596**

• **PATENT ABSTRACTS OF JAPAN Bd. 005, Nr. 113 (P-089), 13. November 1981 (1981-11-13) & JP 56 108185 A (OKI ELECTRIC IND CO LTD), 27. August 1981 (1981-08-27)**

**Beschreibung**

Die Erfindung betrifft eine Bebilderungseinrichtung mit einer Anzahl von Lichtquellen, welche jeweils einen Abstand $s_i$, wobei der Index i die Lichtquellen abzählt, zu einer Gegenstandslinie aufweisen, zur Erzeugung von Bildpunkten der Lichtquellen in einer Projektionslinie der Gegenstandslinie auf einer Druckform, welche sich wenigstens mit einer Geschwindigkeitskomponente v senkrecht zu der durch die Projektionslinie festgelegten Richtung und tangential zur Oberfläche der Druckform bewegt, und mit einer Ansteuerungseinrichtung zum Schalten jeder einzelnen Lichtquelle.

Zur Bebilderung von Druckformen, die eine, ebene oder gekrümmte Fläche bilden, sei es in einem Druckformbelichter oder einem Direct Imaging Druckwerk einer Druckmaschine, wird häufig eine Mehrzahl von Lichtquellen, typischerweise Laser, insbesondere Diodenlaserarrays, eingesetzt. Eine derartige kompakte Mchrstrahllaserlichtquelle ist im Dokument EP 1168 813 A2 offenbart. Je nach zu bebildernder Bildinformation wird jede einzelne Lichtquelle oder jeder einzelne Emitter eingeschaltet, bzw, werden die Lichtintensität beeinflussenden Größen für jeden zu setzenden Druckpunkt derart eingestellt oder vorgegeben, dass jeder einzelne Emitter einen Bildpunkt mit bestimmter Lichtintensität erzeugt. Optional ist häufig auch eine Abbildungsoptik zur Projektion des von den Lichtquellen emittierten Lichtes auf die Druckform, häufig unter Veränderung der Ausbreitungsrichtung des Lichtes bzw. unter Strahlformung, vorgesehen. Für eine präzise und einfache Bebilderung der Druckform mittels der Mehrzahl bekannter Bebilderungsverfahren ist es wünschenswert, dass die Bildpunkte der Lichtquellen auf der Druckform in einer Projektionslinie, typischerweise wenn die Druckform auf einem sogenannten Druckformzylinder oder Druckplattenzylinder aufgenommen ist, parallel zur Zylinderachse, liegen. Falls die Bildpunkte nicht auf einer Projektionslinie oder insbesondere nicht parallel zur Zylinderachse liegen, können auf der Druckform Bildfehler entstehen.

Licht auf einen räumlichen Lichtmodulator derart, dass das Licht jeder punktförmigen Lichtquelle die ganze aktive Fläche des räumlichen Lichtmodulators bestrahlt. Es ist ein weiteres optisches Element vorgesehen, welches das Licht in Richtung der schnellen Achse fokussiert, sodass die gewünschte Fleckgröße in Richtung der schnellen Achse erzeugt wird. Das im Dokument US 5,900,981 offenbarte optische System benutzt natürliche und/oder künstlich eingeführte Aberrationen, um die Empfindlichkeit auf den Smile-Effekt, welcher bei den meisten Laserdiodenbarren auftritt, zu reduzieren. Nachteilig bei dem in diesem Dokument offenbarten optischen System ist der hohe Aufwand für die Justage der Anordnung von Mikrolinsen.

In der US 6,044,096 wird ein kompaktes Laserdiodenarray mit reduzierter Asymmetrie offenbart. Es ist vorgesehen, den Smile-Effekt des Laserdiodenbarrens zu reduzieren, indem eine Mehrzahl von thermischen Lastelementen für die Mehrzahl der individuellen Diodenlichtquellen zugeordnet sind. Die thermischen Lastelemente sind ähnlich zu den individuellen Laserdiodenlichtquellen mit der Ausnahme, dass ihre Ausgangsleistung blockiert ist. Jedes thermische Lastelement wird in direktem Kontakt mit der ihr zugeordneten individuellen Laserdioden gebracht, sodass ein effizienter Wärmeübergang stattfinden kann. Indem ein variabler Strom durch das Lastelement geführt wird, kann die Betriebstemperatur der individuellen Laserlichtquelle verändert bzw. eingestellt werden. Folglich kann die Position zweier Laserlichtquellen zueinander mittels unterschiedlicher Ströme durch die ihnen jeweils zugeordneten Wärmelastelemente erreicht werden. Ein Nachteil einer Temperaturbeeinflussung des Smile-Effekts ist beispielsweise, dass die Wellenlänge der von der Laserlichtquelle emittierten Strahlung verändert wird. Des Weiteren führen Schwankungen in der Temperaturregelung zu Verschiebungen der Position der Laserdiode im Vergleich zur Arrayachse.

Zur Erzeugung von Bildpunkten werden die Lichtquellen eingeschaltet und nach einer gewissen Zeit wieder ausgeschaltet. Typischerweise werden die Emitter durch ein TriggerSignal oder Auslösungssignal zu einem gewissen Auslösezeitpunkt angesteuert. Es ist bereits bekannt, dass, da sich die Druckform mit einer Geschwindigkeitskomponente v senkrecht zu der hauptsächlichen Ausbreitungsrichtung des von der Lichtquelle emittierten

Eine wesentlichen Ursache, aufgrund der die Bildpunkte der Lichtquellen nicht auf einer Projektionslinie auf der Druckform liegen, ist, dass die Lichtquellen zwar mit hinreichender Präzision in einer Gegenstandsebene liegen, in dieser aber nicht auf einer Gegenstandslinie angeordnet sind. Die Gegenstandslinie liegt in der Gegenstandsebene. Grundsätzlich kann die Gegenstandslinie eine Kurve in der Gegenstandsebene mit gekrümmten und geraden Abschnitten sein, ohne Einschränkung der Allgemeinheit wird in der Folge eine gerade Gegenstandslinie betrachtet. Mit anderen Worten: Zu einer Gegenstandslinie weisen die einzelnen Lichtquellen oder Emitter jeweils einen Abstand $s_i$ auf, wobei i die einzelnen Emitter abzählt, wobei wenigstens zwei Lichtquellen einen unterschiedlichen Abstand zu der Gegenstandslinie besitzen. Typischerweise ist dieser Abstand im Rahmen der gewünschten oder erforderlichen Präzision nicht Null oder kann nicht vernachlässigt werden.

Diese Tatsache kann häufig bei Lasern als Lichtquellen, insbesondere bei Diodenlaserarrays auftreten, welche ein oder mehrere Halbleiterbauelemente auf einem Trägerelement umfassen. Häufig treten s-förmige oder u-förmige Verbiegungen eines Halbleiterbauelementes auf, wenn mittels eines Lötprozesses das die Emitter umfassende Halbleiterbauelement auf einem ebenen Trägerelement, wie beispielsweise einem Kupferkühlkörper aufgebracht wird. Dieser herstellungsbedingte Fehler wird auch als Smile-Effekt des Laserdio-

denbarrens bezeichnet.

Aus der Literatur sind Vorrichtungen bekannt, welche eine Reduktion oder einen Ausgleich dieses bei Laserdiodenbarren auftretenden Smile-Effekts ermöglichen. Beispielsweise wird in der US 5,900,981 ein optisches System zur Beleuchtung eines räumlichen Lichtmodulators offenbart. Der Laserdiodenbarren weist eine Mehrzahl von Lichtquellen auf, welche Licht mit unterschiedlicher Divergenz in zwei zueinander orthogonalen Achsen, einer sogenannten langsamen und einer sogenannten schnellen Achse emittieren und eine Anordnung von Mikrolinsen beleuchten. Die Anordnung von Mikrolinsen kollimiert das Licht in Richtung der langsamen Achse. Ein zu den Mikrolinsen benachbartes optisches Element bricht das Licht in der Richtung der schnellen Achse. In Richtung der langsamen Achse fokussiert ein optisches Element das emittierte Lichtes festgelegten Richtung bewegt, der Bildpunkt einer Lichtquelle je nach Auslösezeitpunkt auf der Druckform an einer Position mit Koordinaten liegt, welche eine Funktion des Auslösezeitpunkts sind. Beispielsweise wird diese Tatsache in der im Dokument US B 1 5,174,205 beschriebenen Vorrichtung für die Kontrolle einer Bebilderungseinrichtung für eine Druckform, welche sich während des Bebilderungsvorgangs relativ zur Bebilderungseinrichtung bewegt, ausgenutzt. Die Bildinformation wird in einem ersten Speicher abgelegt, während Korrekturdaten für die Ansteuerung der Lichtquellen sich in einem zweiten Speicher befinden. Die Korrekturdaten werden dazu benutzt, die Zeitintervalle zwischen Bebilderungsschüssen der Lichtquellen zu verändern, um Abweichungen zwischen der gemessenen Position der Druckform im Vergleich zum Bebilderungskopf und der tatsächlichen Position zu kompensieren. Des Weiteren ist in der US B1 5,163,368 offenbart, wie eine Korrektur für jeden Bildpunkt unter Verwendung seiner Koordinaten auf der Druckform vorgenommen werden kann. Diese Koordinatenwerte sind in einer Tabelle abgelegt. Mit den in diesen Dokumenten beschriebenen Korrektureinrichtungen können insbesondere Änderungen der Größe der Druckform in ihren Koordinatenrichtungen berücksichtigt und ausgeglichen werden.

In diesem Zusammenhang sei auch das Dokument DE 26 53 539 erwähnt, in dem die zeitlich verzögerte Ansteuerung einer Bebilderungseinrichtung mit einer Anzahl von Lichtquellen, deren Bildpunkte schräg auf eine Druckform treffen, also nicht parallel zu den Koordinatenlinien des der Geometrie der Druckform entsprechenden Koordinatensystems. Der durch die Schräglage der Bebilderungseinrichtung bedingte Versatz im Vergleich zu einer Koordinatenachse bei gleichzeitigem Einschalten aller Lichtquellen wird durch eine entsprechende Änderung der Aufzeichnungsdaten kompensiert. Unter Beibehaltung der ursprünglichen Aufzeichnungsdaten kann aber der zugeordnete Rasterrechner zur Kompensation des Versatzes auch mit mehreren unterschiedlichen verzögerten Taktimpulsen, also Trigger-Signalen oder Ansteuerungssignalen, beaufschlagt werden.

In diesen Dokumenten des Standes der Technik mit verzögerter Auslösung wird davon ausgegangen, dass eine Bebilderungseinrichtung mit einer Anzahl von Lichtquellen verwendet wird, mit welcher Bildpunkte auf der Druckform erzeugt werden können, welche mit hinreichender Präzision bereits in einer Projektionslinie auf der Druckform liegen, Eine Variation der Ansteuerung einzelner Lichtquellen dient also allenfalls dazu, die Lage des Bildpunktes auf der sich wenigstens mit einer Geschwindigkeitskomponente v senkrecht zu der hauptsächlichen Ausbreitungsrichtung des von der Lichtquelle emittierten Lichtes festgelegten Richtung bewegten Druckform zu verändern oder zu beeinflussen.

Des Weiteren ist aus dem Dokument DE 196 02 307 A1 bekannt, dass eine Bebilderung einer Druckform mittels entlang einer Gegenstandlinie liegenden Laserlichtquellen über ein Transmissionsmusters eines ausgeleuchteten Modulators oder über die Modulation der Pumpströme, wenn die Laserlichtquellen einzeln modulierbar sind, erfolgen kann. Die Oberfläche einer Druckform wird mit einer Geschwindigkeitskomponente v senkrecht zu einer durch die Projektionslinie der Laserlichtquellen bzw. der Austrittspunkte des Laserlichts aus dem Modulator bewegt.

Im Dokument US 6,201,596 wird beschrieben, dass ein Ausgleich von Positionsfehlern, insbesondere Abweichungen zu einer Solllage entlang einer Geraden, von auf einem Träger montierten einzelnen Laserdioden mittels einer zeitlich verzögerten Ansteuerung der Auslösung für die einzelnen Lichtquellen in Abhängigkeit der auftretenden Positionsfehler erfolgen kann.

Im Dokument EP 0 878 773 A2 ist ein Schreibkopf mit einem durch eine Ansteuerungsvorrichtung individuell adressierbaren Diodenlaserarray beschrieben. Die Diodenlaser sind entlang einer Geraden angeordnet, die bevorzugt parallel zur Rotationsachse eines Zylinders ausgerichtet ist, auf welchem Bildpunkte in einer Projektionslinie auf einem Film zu beschreiben sind. Der Zylinder ist rotierbar, so dass sich die projizierten Bildpunkte relativ und tangential zur Oberfläche des Filmes bewegen.

Aufgabe der vorliegenden Erfindung ist es, eine Bebilderungseinrichtung für eine Druckform zur schaffen, welche eine Anzahl von Bildpunkten, die auf eine Projektionslinie einer Gegenstandslinie angeordnet sind, mit einer Anzahl von Diodenlaserlichtquellen auf einem Diodenlaserbarren erzeugt, wobei wenigstens zwei Diodenlaser auf dem Diodenlaserbarren einen unterschiedlichen Abstand zu der Gegenstandslinie aufweisen.

Diese Aufgabe wird durch eine Bebilderungseinrichtung mit den Merkmalen gemäß Anspruch 1 und durch ein Verfahren zur Erzeugung von Bildpunkten gemäß Anspruch 5 gelöst. Vorteilhafte Ausführungsformen und Weiterbildungen der erfindungsgemäßen Bebilderungseinrichtung und des erfindungsgemäßen Verfahrens sind in den Unteransprüchen charakterisiert.

Im Fall von Diodenlaserbarren ist eine wesentliche Ursache für eine ungleichmäßige Lage der Emitter zu einer Gegenstandslinie der sogenannte Smile-Effekt, wie oben näher beschrieben. Mit der erfindungsgemäßen Bebilderungseinrichtung kann auf einfache Art und Weise der Smile-Effekt kompensiert werden.

Die erfindungsgemäße Bebilderungseinrichtung umfasst eine Anzahl von Lichtquellen zur Erzeugung von Bildpunkten der Lichtquellen in einer Projektionslinie auf einer Druckform. Die Lichtquellen weisen jeweils einen Abstand $s_i$, wobei der Index i die Lichtquellen abzählt, zu einer Gegenstandslinie in der Gegenstandsebene, welche durch die Lichtquellen definiert ist, auf. Beispielsweise liegen bei Laserlichtquellen auf einem Substrat die Endspiegel der Laserresonatoren im wesentlichen in einer Ebene und können damit eine Gegenstandsebene festlegen. Alternativ dazu kann eine Gegenstandsebene auch eine Ebene räumlich hinter einer den Lichtquellen nachgeordneten Abbildungsoptik sein. Die Projektionslinie umfasst die Punkte der Druckform, auf denen das Bild der Gegenstandslinie zu einem ersten Zeitpunkt auf der Druckform zu liegen kommt. Projektionslinie und Gegenstandslinie weisen ein Projektionsverhältnis k auf. Unter einem Projektionspunkt einer Lichtquelle ist derjenige Punkt auf der Druckform zu verstehen, auf den das von der Lichtquelle emittierte Licht zu einem bestimmten Zeitpunkt fallen würde, wenn diese in besagtem Zeitpunkt eingeschaltet ist. Unter einem Bildpunkt einer Lichtquelle ist derjenige Punkt auf der Druckform zu verstehen, auf den das von der Lichtquelle emittierte Licht zu einem bestimmten Zeitpunkt auftrifft, während die Lichtquelle tatsächlich eingeschaltet ist.

Die Druckform bewegt sich wenigstens mit einer Geschwindigkeitskomponente v senkrecht zu der durch die Gegenstandslinie festgelegten Richtung und tangential zur Oberfläche der Druckform, wenigstens in der Nähe der Projektionspunkte der Lichtquellen. Folglich bewegt sich die Projektionslinie, die wie oben beschrieben definiert ist, mit der Druckform.

Der Bebilderungseinrichtung ist eine Ansteuerungseinrichtung zum Schalten jeder einzelnen Lichtquelle zugeordnet. Das Schalten umfasst dabei ein Einschalten jeder einzelnen Lichtquelle, welche dann mit einer bestimmten Intensität in einem bestimmten Zeitintervall Licht emittiert und ein Ausschalten der Lichtquelle. Unter Auslösen wird in diesem Zusammenhang verstanden, dass wenigstens das Einschalten vorgenommen wird. Intensität und Belichtungsdauer für einen Bildpunkt sind eine Funktion der zu bebildernden Daten. Mittels des über die Druckform geführten Bildpunktes wird ein Druckpunkt erzeugt.

Die erfindungsgemäße Einrichtung zeichnet sich dadurch aus, dass der Ansteuerungseinrichtung der Lichtquellen eine zeitliche Verzögerungseinrichtung zugeordnet ist, welche den Auslösezeitpunkt der Ansteuerungseinrichtung für jede Lichtquelle in Abhängigkeit vom jeweiligen Abstand $s_i$ der Lichtquelle zu der Gegenstandslinie verschiebt.

Ohne Einschränkung der Allgemeinheit ist eine vorteilhafte Gegenstandslinie eine gerade Linie in der Gegenstandsebene, insbesondere ist vorteilhaft, wenn die Lichtquellen in einer Halbebene der Gegenstandslinie liegen, welche mittels der durch die Gegenstandslinie verlaufende Gerade begrenzt ist.

In anderen Worten ausgedrückt, zeichnet sich die erfindungsgemäße Bebilderungseinrichtung dadurch aus, dass der Ansteuerungseinrichtung eine zeitliche Verzögerungseinrichtung zugeordnet ist, welche relativ zum Auslösezeitpunkt, also dem Zeitpunkt des Einschaltens, einer ersten Lichtquelle, deren Projektionspunkt auf der Projektionslinie der Gegenstandslinie zu liegen kommt, so dass durch das Auslösen der ersten Lichtquelle ein Bildpunkt auf der Projektionslinie erzeugt wird, jede andere Lichtquelle der Anzahl von Lichtquellen zeitlich abweichend derart schaltet oder triggert, dass auch der korrespondierende oder zugehörige Bildpunkt auf der Projektionslinie der Gegenstandslinie erzeugt wird, wenn der korrespondierende oder zugehörige Projektionspunkt der anderen Lichtquelle auf der Projektionslinie liegt. Typischerweise liegt der Auslösezeitpunkt der ersten Lichtquelle an oder nach dem ersten Zeitpunkt, durch den die Lage der Projektionslinie auf der Druckform definiert ist.

Mit anderen Worten: Eine erste Lichtquelle in der erfindungsgemäßen Bebilderungseinrichtung mit einer Anzahl von Lichtquellen wird dann ausgelöst, wenn ihr Projektionspunkt auf der Projektionslinie der Gegenstandslinie zu liegen kommt, so dass der korrespondierende oder zugehörige Bildpunkt auf der Projektionslinie liegt. Das gleichzeitige Auslösen jeder anderen Lichtquelle in der Bebilderungseinrichtung würde im allgemeinen dazu führen, dass jeder Bildpunkt jeder anderen Lichtquelle nicht auf der Projektionslinie liegt, weil im allgemeinen die Projektionspunkte am Auslösezeitpunkt der ersten Lichtquelle nicht auf der Projektionslinie der Gegenstandslinie liegen. Da sich aber die Druckform relativ mit einer Geschwindigkeitskomponente v senkrecht zu der durch die Projektionslinie festgelegten Richtung und tangential zur Oberfläche der Druckform bewegt, ändert jeder Projektionspunkt jeder anderen Lichtquelle seine Lage auf der Druckform, also auch seine Lage relativ zum durch den Bildpunkt der ersten Lichtquelle auf die Druckform gesetzten Druckpunkt bzw. zur am ersten Zeitpunkt definierten Projektionslinie der Gegenstandslinie auf der Druckform. Nach einer bestimmten Zeit passiert jeder Projektionspunkt jeder anderen Lichtquelle die Projektionslinie, sodass die Auslösung dieser Lichtquelle zu einer Bebilderung durch einen Bildpunkt auf der Projektionslinie der Gegenstandslinie führt.

Die zeitlich versetzte Auslösung der einzelnen Lichtquellen in der erfindungsgemäßen. Bebilderungseinrichtung ist ohne Beschränkung der Allgemeinheit als verzögerte Auslösung zum Auslösezeitpunkt einer ersten Lichtquelle beschrieben. Dieser Darstellung liegt die Vorstellung zugrunde, dass als erste Lichtquelle diejenige angesteuert wird, deren Projektionspunkt aufgrund der Relativbewegung zwischen Bebilderungseinrichtung und Druckform als erste die Projektionslinie der Gegenstandslinie erreicht. Bevorzugt wird dabei eine Gegenstandslinie gewählt, für die gilt, dass alle Lichtquellen in einer Halbebene der Gegenstandsebene liegen, welche durch die durch die Gegenslandslinie verlaufende Gerade begrenzt ist. Für den Fachmann ist klar, dass, wenn als erste Lichtquelle eine Lichtquelle bezeichnet wird, deren Bildpunkt auf der Projektionslinie der Gegenstandslinie erst nach Bildpunkten mehrerer anderer Lichtquellen der Bebilderungseinrichtung zu liegen kommt, für die mehreren anderen Lichtquellen eine vorauseilende Auslösung erforderlich ist. In der erfindungsgemäßen Bebilderungseinrichtung wird jedes Triggersignal oder Ansteuerungssignal zur Auslösung einer Bebilderung für jeden einzelnen Emitter über eine Verzögerungseinrichtung oder eine Delay-Schaltung zeitlich verschoben, sodass die Abweichung der Lage der einzelnen Lichtquellen zu einer Gegenstandslinie in der durch die Lichtquellen definierten Ebene kompensiert wird.

Bevorzugt handelt es sich bei den auf einem Diodenlaserbarren angeordneten Lichtquellen in der erfindungsgemäßcn Bebilderungseinrichtung um eindimensionales Array aus Diodenlasern.

Zusätzlich kann die erfindungsgemäße Bebilderungseinrichtung eine Abbildungsoptik umfassen. Bevorzugt wird diese Abbildungsoptik Objekte mit einem Projektionsverhältnis k abbilden. Es kann ebenfalls vorgesehen sein, dass strahlformende Elemente, Lichtumlenkelemente oder Lichtleitelemente, wie Spiegel, Lichtwellenleiter oder dergleichen, oder Elemente zur Polarisationsdrehung des Lichtes vorgesehen sind. Typischerweise umfasst die Abbildungsoptik Elemente zur Divergenz- oder Astigmatismuskorrektur der Lichtquellen und/oder Elemente zur Aberrationskorrektur.

In bevorzugter Ausrührungsform kann die Druckform auf einen Zylinder aufgespannt oder aufgenommen werden. Die Projektionslinie der Gegenstandslinie verläuft dabei bevorzugt im Wesentlichen parallel zur Zylinderachse, um welche die Druckform gedreht werden kann. Des Weiteren kann vorgesehen sein, dass die Bebilderungseinrichtung im Wesentlichen parallel zur Zylinderachse bewegbar ist. Durch Rotationsbewegung um und Translationsbewegung entlang der Zylinderachse können alle relevanten, zur Bebilderung vorgesehenen Punkte auf der Druckform erreicht werden.

In bevorzugter Ausführung ist vorgesehen, dass sich die Druckform mit einer Geschwindigkeitskomponente v senkrecht zu der durch die Gegenstandslinie festgelegten Richtung und tangential zur Oberfläche der Druckform gleichförmig bewegt. Mit anderen Worten: Die Geschwindigkeitskomponente v ist im wesentlichen konstant. Das bedeutet, dass bei einem Projektionsverhältnis k nach dem Auslösezeitpunkt einer ersten Lichtquelle der erfindungsgemäßen Bebilderungseinrichtung jede andere Lichtquelle der Anzahl von Lichtquellen nach der Zeit $t_i = k \dfrac{s_i}{v}$, wobei der Index i die Lichtquellen abzählt, ausgelöst wird. Für den Fachmann ist klar, dass es hinreichend ist, das Bewegungsgesetz oder das Geschwindigkeitsprofil, also den Zusammenhang zwischen Geschwindigkeit und Zeit, für die Relativbewegung zu kennen. Dadurch kann, auch wenn es sich um eine ungleichförmige Bewegung handelt, die erforderliche Verzögerungszeit $t_i$ für die i-te Lichtquelle bestimmt werden.

Die erfindungsgemäße Bebilderungseinrichtung kann zur Erzeugung eines Feldes von Druckpunkten durch Reihen von Bildpunkten eingesetzt werden, insbesondere für ein Feld, in welchem benachbarte zu erzeugende Druckpunkte einen Abstand h aufweisen. Wenn der Abstand $s_i$ einer Lichtquelle größer als der n-fache Abstand h/k benachbarter Druckpunkte ist, wobei n eine natürliche Zahl und k das Projektionsverhältnis ist, kann die Ansteuerung der betreffenden Lichtquelle mit der Bildinformation des erzeugenden Druckpunktes, welcher den geringsten Abstand zur Projektionslinie der Gegenstandslinie aufweist, erfolgen. Die Ansteuerungseinrichtung schaltet dann die besagte Lichtquelle derart, dass im Verzögerungszeitintervall Punkte auf der Druckform im Wesentlichen die Strecke $(ks_i - nh)$ durchgelegt haben, wobei k das Projektionsverhältnis zwischen Gegenstandslinie und Projektionslinie und n ist Int $(s_i k / h)$, also das größte natürliche Vielfache von h, für das gilt, dass n h kleiner als $s_i$ k ist.

Das erfindungsgemäße Verfahren zur Erzeugung von Bildpunkten von einer Anzahl von Lichtquellen, welche jeweils einen Abstand $s_i$, wobei der Index i die Lichtquellen abzählt, zu einer Gegenstandslinie in der durch die Lichtquellen definierten Ebene aufweisen, in einer Projektionslinie der Gegenstandslinie auf einer Druckform, welche wenigstens mit einer Geschwindigkeitskomponente v senkrecht zu der durch die Gegenstandslinie festgelegten Richtung und tangential zur Druckformoberfläche bewegt wird, umfasst dabei die folgenden Schritte. Es wird die Belichtung durch eine erste Lichtquelle ausgelöst, wenn deren Projektionspunkt auf der Projektionslinie der Gegenstandslinie zu liegen kommt. Eine zweite Lichtquelle wird zeitlich verzögert zum Auslösen der ersten Lichtquelle derart ausgelöst, dass auch der korrespondierende Bildpunkt der zweiten Lichtquelle auf der Projektionslinie der Gegenstandslinie liegt, wenn also der korrespondierende Projektionspunkt der zweiten Lichtquelle die Projektionslinie passiert. Es ist ein analoges Vorgehen für jede weitere Lichtquelle in der Bebilderungseinrichtung mit einer Anzahl von Lichtquellen vorgesehen.

Mit der erfindungsgemäße Bebilderungseinrichtung bzw. mit dem erfindungsgemäßen Verfahren zur Erzeugung von Bildpunkten von einer Anzahl von Lichtquellen ist eine einfach Kompensation des Smile-Effektes von Diodenlaserarrays möglich, ohne eine Reduktion der Strahlqualität in Kauf zu nehmen. Mittels einer Realisation der Verzögerungseinrichtung in Form einer programmierbaren Logik ist auch für eine große Anzahl von Emittern, beispielsweise größer als 20 einzelne Lichtquellen, ein Aufbau in einer sehr kompakten Bauform möglich. Vorteilhaft ist die Anzahl der Emitter oder Lichtquellen eine Primzahl oder eine Prinzahlpotenz und der Abtand der Emitterprojektionspunkte beträgt ein Vielfaches von h, wobei das Vielfache eine teilerfremd zu der genannten Primzahl oder Primzahlpotenz ist.

Besonders vorteilhaft ist der Einsatz der erfindungsgemäßen Bebilderungseinrichtung in einem Druckformbelichter oder einem Druckwerk, in welchem eine Druckform direkt bebildert werden kann. Eine erfindungsgemäße Druckmaschine mit einem Anleger, wenigstens einem Druckwerk und einem Ausleger umfasst wenigstens ein Druckwerk, welches eine erfindungsgemäße Bebilderungseinrichtung aufweist.

Weitere Vorteile und vorteilhafte Ausführungsformen und Weiterbildungen der Erfindung werden anhand der nachfolgenden Figuren sowie deren Beschreibungen dargestellt. Es zeigt im Einzelnen:

Figur 1 eine beispielhafte Skizze zur Erläuterung der der Lage einer Anzahl von Lichtquellen zu einer Gegenstandslinie;

Figur 2 eine bevorzugte Ausführungsform der erfindungsgemäßen Bebilderungseinrichtung mit einer zeitlichen Verzögerungseinrichtung zur abweichenden Schaltung der Anzahl von Lichtquellen;

Figur 3 eine Ausführungsform der erfindungsgemäßen Bebilderungseinrichtung mit einer zeitlichen Verzögerungseinrichtung zur Bebilderung einer Druckform, welche auf einem rotierbaren Zylinder aufgenommen ist;

Figur 4 eine beispielhafte Skizze zur Erläuterung der benutzten Notation hinsichtlich der Lage zu bebildernder Druckpunkte auf einer Druckform;

Figur 5 eine schematische Darstellung einer beispielhaften Lage von Bildpunkten ohne Kompensation durch die zeitliche Verzögerungseinrichtung der erfindungsgemäßen Bebilderungseinrichtung auf der Druckform;

Figur 6 eine schematische Darstellung der beispielhaften Lage von Bildpunkten ohne Kompensation durch veränderte Ansteuerung derjenigen Bildpunkte, deren Abstand größer als der Druckpunktabstand ist; und

Figur 7 eine schematische Darstellung der Lage von Bildpunkten mit Kompensation durch verzögerte Ansteuerung der Lichtquellen.

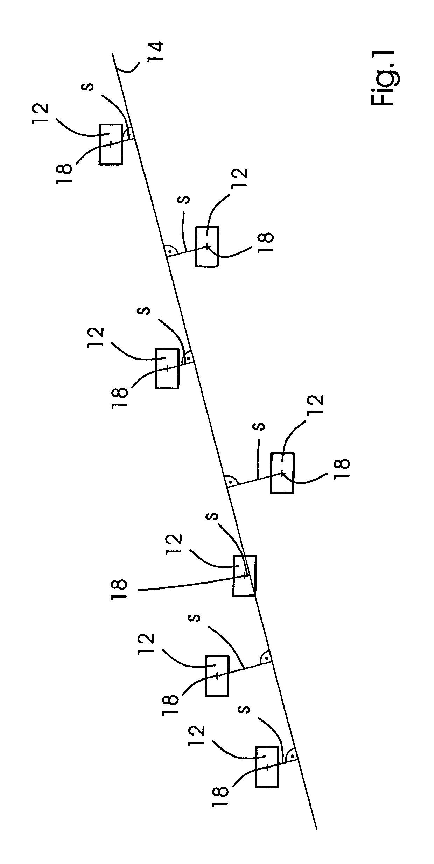

Die in Figur 1 gezeigte beispielhafte Skizze zeigt die Lage einer Anzahl von Lichtquellen zu einer Gegenstandslinie. Die Figur 1 zeigt beispielhaft und ohne Beschränkung der Allgemeinheit sieben Lichtquellen 12 und eine Gegenstandslinie 14. Für jede Lichtquelle 12 wird unter dem Abstand s das Lot vom Mittelpunkt 18 der Lichtquelle 12 auf die Gegenstandslinie 14 verstanden. In den meisten Fällen wird die Gegenstandslinie 14 im Wesentlichen parallel zu einer Begrenzungslinie der Emitterfläche der Lichtquelle 12 verlaufen, in der Figur 1 ist jedoch der allgemeine Fall, in welchem ebenfalls die Abstände s der einzelnen Lichtquellen unterschiedlich groß sind, gezeigt.

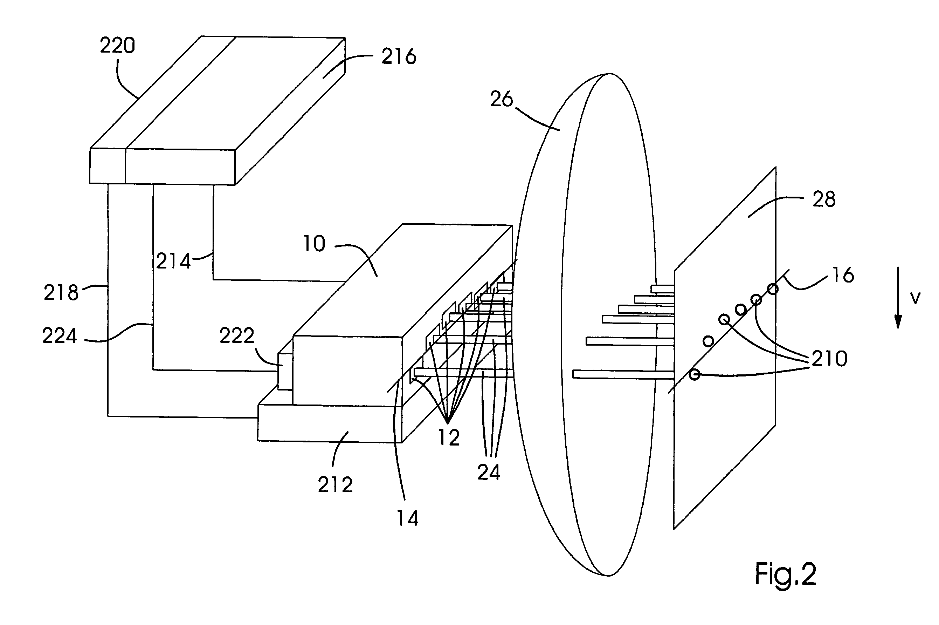

Die Figur 2 stellt schematisch eine bevorzugte Ausführungsform der erfindungsgemäßen Bebilderungseinrichtung mit einer zeitlichen Verzögerungseinrichtung zur abweichenden Schaltung einzelner Lichtquellen dar. Das Bebilderungsmodul 10 besteht aus einem einzeln ansteuerbaren Array einer Anzahl von Lichtquellen 12 typischerweise Laserlichtquellen, insbesondere Diodenlaserarrays. Im allgemeinen liegen die Lichtquellen 12 nicht auf einer Gegenstandslinie 14, sondern weisen jeweils einen individuellen Abstand zu dieser Gegenstandslinie 14 auf. In der Figur 2 ist beispielhaft der allgemeine Fall gezeigt, dass nicht alle Lichtquellen 12 in einer Halbebene der Gegenstandslinie liegen, welche mittels der durch die Gegenstandslinie verlaufende Gerade begrenzt ist. Die von den Lichtquellen 12 emittierten Lichtstrahlen 24 werden mittels einer Abbildungsoptik 26 auf Bildpunkte 210 auf einer Druckform 28 abgebildet. Im allgemeinen weisen die Bildpunkte 210 zu einer Projektionslinie 16, welche der Abbildung der Gegenstandslinie 14 durch die Abbildungsoptik 26 an einem ersten Zeitpunkt entspricht, einen individuellen Abstand auf. Der Abstand eines bestimmten Bildpunktes 210 zur Projektionslinie 16 wird bei Ausschluss von Abbildungsfehlern der Abbildungsoptik 26 proportional dem Abstand der den Bildpunkt 210 erzeugenden Lichtquelle 12 zur Gegenstandslinie 14 mit dem Proportionalitätsfaktor des Projektionsverhältnisses k der Abbildungsoptik 26 sein.

Die Lichtquellen 12 im Bebilderungsmodul 10 können im kontinuierlichen Laserbetrieb eingesetzt werden. Zur Erzeugung einzelner Lichtpakete wird die Laseremission für ein gewisses Zeitintervall entsprechend unterdrückt oder unterbrochen. Da die Druckform 28 sich relativ mit einer Geschwindigkeitskomponente v zur Bebilderungseinrichtung wenigstens tangential zur Oberfläche der Druckform 28 bewegt, liegen die Bildpunkte 210 der Lichtquellen 12, wenn die Lichtquellen 12 alle gleichzeitig ausgelöst werden, zu unterschiedlichen Auslösezeitpunkten an unterschiedlichen Koordinatenpositionen auf der Fläche der Druckform 28. Die Projektionslinie 16 der Gegenstandslinie 14 bewegt sich mit der Druckform 28.

Die Abbildungsoptik 26 kann sowohl reflektierende, transmittierende, refraktive oder ähnliche optische Komponenten aufweisen. Bevorzugt handelt es sich dabei um mikrooptische Komponenten, also Komponenten, welche das von einer individuellen Lichtquelle 12 emittierte Licht beeinflussen, während das Licht von den anderen Lichtquellen 12 unbeeinflusst durch diese Komponente bleibt. Insbesondere für den Fall, dass die Lichtquellen 12 Laser, insbesondere Diodenlaser, sind, kann die Abbildungsoptik 26 sowohl eine vergrößernde wie auch verkleinernde als auch in den beiden Richtungen parallel und senkrecht zur aktiven Zone der Laser unterschiedliche Abbildungsmaßstäbe besitzen, welches insbesondere vorteilhaft zur Divergenz- und/oder Aberrationskorrektur ist. Die Oberfläche der Druckform 28 wird in ihren physikalischen und/oder chemischen Eigenschaften durch die Laserstrahlung verändert, sodass durch die Belichtung mit einer bestimmten Intensität und während eines bestimmten Zeitintervalls Bildinformation für einen Druckpunkt geschrieben wird.

In bevorzugter Ausführungsform befindet sich das Bebilderungsmodul 10 auf einem Kühlelement 212, beispielsweise ein Kupferkühlkörper mit Kühlwasserdurchfluss. Das Bebilderungsmodul 10 ist mittels einer Leitung zur Stromversorgung und Steuerung 214 mit einer Ansteuerungseinrichtung 216 verbunden. Die Ansteuerungseinrichtung 216 weist einzelne Komponenten auf, mit denen es möglich ist, die einzelnen Lichtquellen 12 des Arrays getrennt von einander anzusteuern oder zu regeln. Mittels einer Leitung zur Steuerung des Kühlelementes 218 ist das Kühlelement 212 mit der Temperaturregelung 220 verbunden.

Die Ausführungsform der erfindungsgemäßen Bebilderungseinrichtung, welche in Figur 2 gezeigt ist, umfasst eine Verzögerungseinrichtung 222, welche in kompakter Bauweise mit dem Bebilderungsmodul 10 integriert ist. Die Verzögerungseinrichtung 222 ist über die Verbindung 224 mit der Ansteuerungseinrichtung 216 verknüpft, ist also dieser zugeordnet. Die Verzögerungseinrichtung 222 umfasst dabei vorzugsweise eine programmierbare Logik oder ein ASIC, einen anwendungsspezifischen integrierten Schaltkreis. Mit dem Auslösen bzw. Einschalten einer ersten Lichtquelle 12 wird eine Zähleinrichtung mit Zählerstartwerten für jede andere Lichtquelle 12 im Bebilderungsmodul 10 gestartet. Es kann vorgesehen sein, dass in der Verzögerungseinrichtung 222 die Bebilderungsdaten für einzelnen Lichtquellen 12 in einem Speicher ablegt sind. Die Zähleinrichtung zählt für jede Lichtquelle 12 vom Startwert auf Null zurück. Durch das Erreichen des Null-Wertes wird die korrespondierende Lichtquelle 12 geschaltet und die Übergabe der entsprechenden Daten an diesen Emitter ausgelöst.

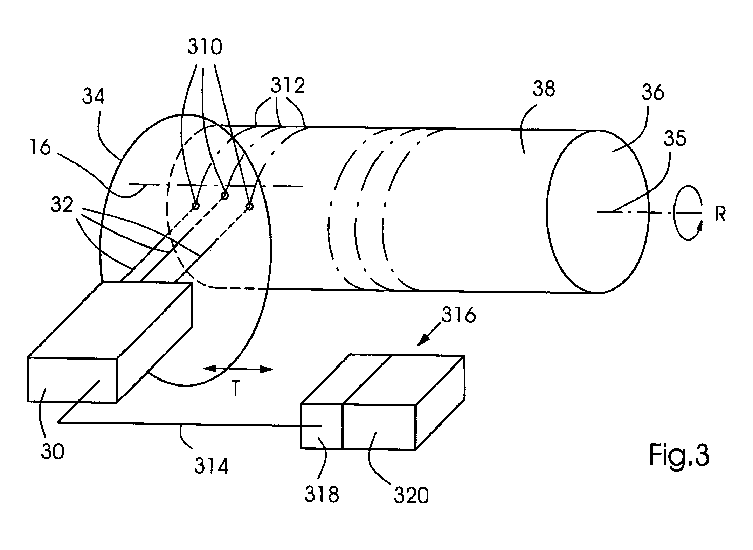

Die Figur 3 zeigt eine Ausführungsform der erfindungsgemäßen Bebilderungseinrichtung mit einer zeitlichen Verzögerungseinrichtung zur Bebilderung einer Druckform, welche auf einem rotierbaren Zylinder aufgenommen ist. Das Bebilderungsmodul 30 weist beispielhaft drei Lichtquellen auf, sodass drei Lichtstrahlen 32 erzeugt werden, welche mittels der Abbildungsoptik 34 auf drei Bildpunkte 310 auf der Druckform 38 abgebildet werden. Die drei Bildpunkte haben einen individuellen Abstand zu einer Projektionslinie 18. Ohne Beschränkung der Allgemeinheit ist eine Projektionlinie 18 gezeigt, für welche gilt, dass die drei Bildpunkte 310 in einer Halbebene der Projektionsebene liegen, welche durch die durch die Projektionslinie 18 verlaufende Gerade begrenzt ist. Die Druckform 38 befindet sich auf einem Zylinder 36, welcher um seine Symmetrieachse 35 drehbar ist. Diese Drehung ist durch den Pfeil R bezeichnet. Es sind hier nicht zeichnerisch dargestellte Mittel vorgesehen, so dass das Bebilderungsmodul 30 im Wesentlichen parallel zur Symmetrieachse 35 des Zylinders 36 auf im Wesentlichem linearen Wege bewegt werden kann, welches mit dem Doppelpfeil T gekennzeichnet ist. Zur kontinuierlichen Bebilderung rotiert der Zylinder 36 mit auf ihm aufgenommenen Druckform 38 gemäß der Rotationsbewegung R, und das Bebilderungsmodul 30 translatiert längs des Zylinders 36 gemäß der Bewegungsrichtung T. Es ergibt sich eine Bebilderung, welche auf schraubenförmigem Wege die Symmetrieachse 35 des Zylinders 36 umläuft. Der Weg der Projektionspunkte bzw. Bildpunkte 310 ist durch die Linien 312 angedeutet. Mit anderen Worten: Nach erfolgter Bebilderung von hier beispielhaft drei Punkten erfolgt eine relative Verschiebung von Druckform 38 und Bildpunkten 310 mit einer Vektorkomponente senkrecht zu der durch die Projektionslinie 18 definierten Richtung um einen bestimmten Betrag, sodass an einer anderen Position der Druckform 38 erneut hier beispielhaft drei Punkte geschrieben werden. Dadurch entstehen so genannte Rasterscanlinien von Bildpunkten. Das Bebilderungsmodul 30 ist mit einer Verbindung 314 mit einer Steuerungseinheit 316 verknüpft. In dieser Ausführungsform umfasst die Steuerungseinheit 316 eine Verzögerungseinrichtung 318 und eine Ansteuerungseinrichtung 320.

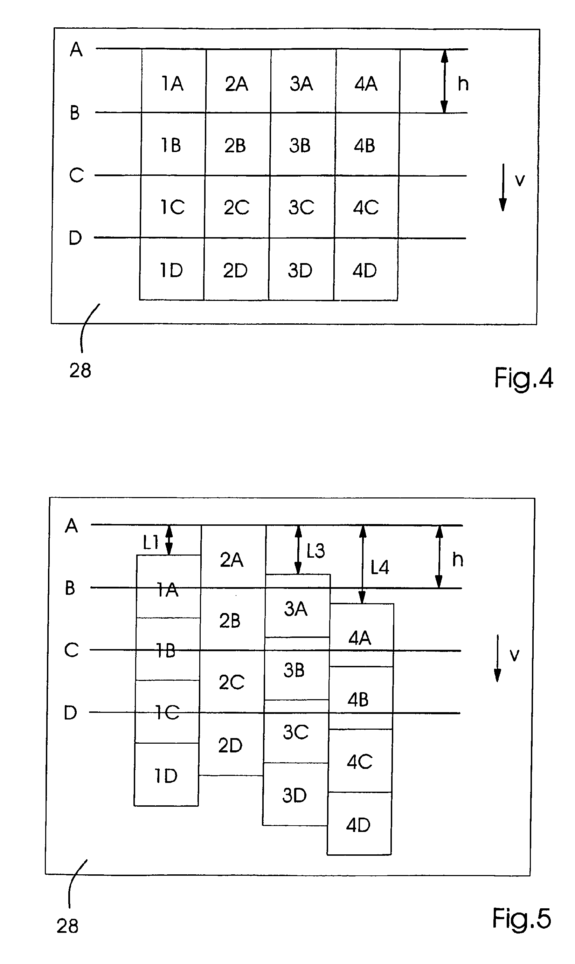

Die Figuren 4, 5, 6 und 7 dienen zur Erläuterung anhand eines Beispiels ohne Beschränkung der Allgemeinheit, wie mit der erfindungsgemäßen Bebilderungseinrichtung mit einer Anzahl von Lichtquellen, welche jeweils einen Abstand $s_i$, wobei der Index i die Lichtquellen abzählt, zu einer Gegenstandslinie in der durch die Lichtquellen definierten Ebene aufweisen, zur Erzeugung von Bildpunkten der Lichtquellen in einer Projektionslinie der Gegenstandslinie auf einer Druckform, welche sich wenigstens mit einer Geschwindigkeitskomponente v senkrecht zu der durch die Gegenstandslinie und tangential zur Oberfläche der Druckform bewegt, Druckpunkte durch Bildpunkte auf der Projektionslinie bzw. ein Feld von Druckpunkten durch Reihen erzeugt wird.

Die Figur 4 ist eine beispielhafte Skizze zur Erläuterung der benutzten Notation hinsichtlich der Lage zu bebildernder Druckpunkte auf einer Druckform 28. Im Beispiel der Figur 4 wird ohne Beschränkung der Allgemeinheit von vier Emittern oder Lichtquellen ausgegangen, welche hier beispielhaft ein Feld von 4 x 4 Druckpunkten durch Bildpunkte der Lichtquellen auf der Druckform erzeugen. Es wird hier beispielhaft davon ausgegangen, dass ein regelmäßiges, kartesisches Feld zu beschreiben ist. Es sind jedoch auch andere Muster zu bebildernder Druckpunkte denkbar. Die Ausdehnung eines Druckpunktes bzw. der Abstand benachbarter Druckpunkte zueinander, gemessen von einem Mittelpunkt zum nächsten Mittelpunkt ist mit h bezeichnet. Vereinfacht sind die Druckpunkte als Quadrate dargestellt; die tatsächliche Form ist durch die Form des Bebilderungslichtstrahls mit seinen Prozessparametern, wie Intensität, Belichtungszeit, Relativgeschwindigkeit zwischen Druckform und Bebilderungslichtstrahl und dergleichen, bestimmt. Die Druckpunkte im Feld sind mit einer Zahl-Buchstabenkombination bezeichnet: Die Zahl entspricht dem Index, welcher die einzelnen Lichtquellen, insbesondere Laser, abzählt, während der Buchstabe in der Ordnung des Alphabets die zeitlich hintereinander liegenden Bebilderungsschritte abzählt. Die Figur 4 zeigt eine erste Projektionslinie A, eine zweite Projektionslinie B, eine dritte Projektionslinie C und eine vierte Projektionslinie D, welche die Projektionspunkte der hier nicht gezeigten vier Emittern oder Lichtquellen zeitlich nacheinander passieren, wenn sich die Druckform mit einer Geschwindigkeitskomponente v in Pfeilrichtung relativ zum die Lichtquellen umfassenden Bebilderungsmodul bewegt. Wenn der Projektionspunkt einer ersten Lichtquelle oder eines ersten Emitters auf der ersten Projektionslinie A zu liegen kommt, wird ein Trigger- oder Schaltsignal zur Auslösung der Bebilderung durch den Bildpunkt generiert, sodass ein Druckpunkt gesetzt wird.

In der Figur 5 ist eine schematische Darstellung einer beispielhaften Lage von Bildpunkten ohne Kompensation auf der Druckform 28 durch die zeitliche Verzögerungseinrichtung der erfindungsgemäßen Bebilderungseinrichtung gezeigt. Beispielhaft passiert hier ohne Beschränkung der Allgemeinheit der Projektionspunkt der zweiten Lichtquelle zeitlich als erster die erste Projektionslinie A. Wenn alle Lichtquellen zur gleichen Zeit angesteuert werden, so liegen aufgrund des individuellen Abstands jeder Lichtquelle zu einer Gegenstandslinie in der durch die Lichtquellen definierten Ebene die Bildpunkte der anderen Lichtquellen im Vergleich zur Startkante des Bildpunktes 2A verschoben oder versetzt. Die durch die erste Lichtquelle erzeugten Bildpunkte weisen beispielhaft einen ersten Versatz L1, die durch die dritte Lichtquelle erzeugten Bildpunkte einen dritten Versatz L3 und die durch die vierte Lichtquelle erzeugten Bildpunkte einen vierten Versatz L4 auf. Beispielhaft ist in der Figur 5 gezeigt, dass die Bildpunkte der vierten Lichtquelle um mehr als eine Druckpunktlänge h von der entsprechenden Projektionslinie entfernt liegen.

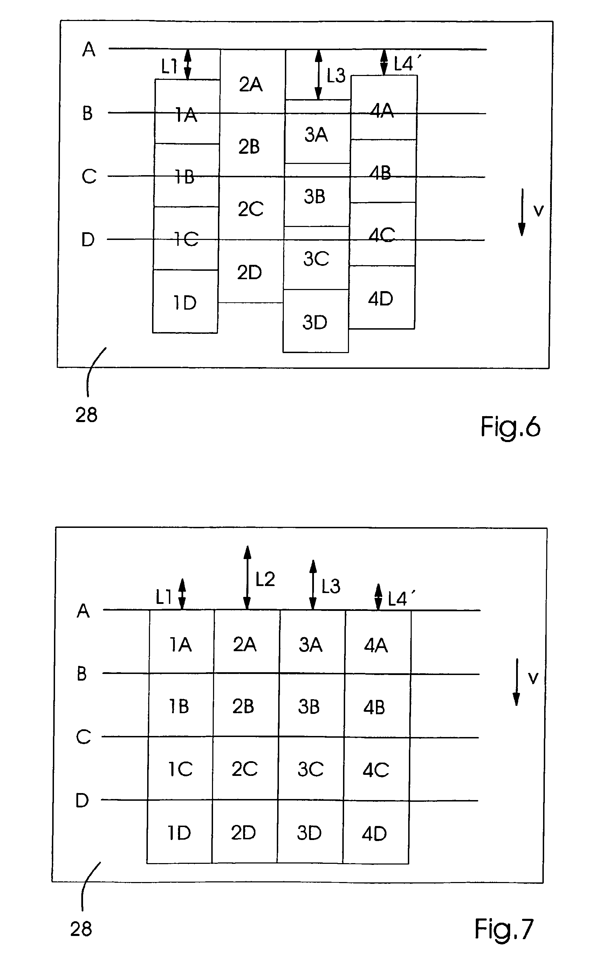

Die Figur 6 ist eine schematische Darstellung der beispielhaften Lage von Bildpunkten ohne Kompensation auf der Druckform 28 durch veränderte Ansteuerung der Lichtquellen mit denjenigen Projektionspunkten bzw. Bildpunkten, deren Abstand größer als der Druckpunktabstand ist. Zur Reduktion der Positionsabweichung, welche größer als eine Bildpunktlänge h ist, kann die Ansteuerung der entsprechenden Lichtquelle um n Bebilderungsschritte vorverlegt werden, wobei n diejenige natürliche Zahl ist, für welche gilt, dass (L4 - nh) minimal, aber positiv, also n=Int(L4/h) ist. Für das in Figur 6 gezeigte Beispiel bedeutet dies, dass durch das der Passage der ersten Projektionslinie A korrespondierende Schaltsignal durch die vierte Lichtquelle der Druckpunkt 4A gesetzt wird und der Druckpunkt 4B dem Druckpunkt 4A aus der Figur 5 entspricht. Analog werden Positionsabweichungen, welche größer als zwei Bildpunktlängen h sind, ausgeglichen, indem die Daten entsprechend zwei Bebilderungsschritte zeitlich verschoben werden. Mittels dieses Vorgehens der Verschiebung von Daten kann erreicht werden, dass alle Positionsabweichungen kleiner als eine Bildpunktlänge h sind. Beispielhaft ist in Figur 6 der Abstand des vierten Bildpunktes auf den vierten Restversatz L4' reduziert, wobei in anderen Worten L4' in diesem Fall dem Divisionsrest (L4 mod h) entspricht.

Die Figur 7 ist eine schematische Darstellung der Lage von Bildpunkten mit Kompensation durch verzögerte Ansteuerung der Lichtquellen nach einem Auslösezeitpunkt einer zeitlich betrachteten ersten Lichtquelle, hier beispielhaft der zweiten Lichtquelle. Zur Reduktion von Positionierungsabweichungen, welche kleiner als eine Bildpunktlänge h sind, kann die Datenübergabe und die Auslösung der Lichtquellen nach einem Auslösezeitpunkt einer ersten Lichtquelle Lichtquellen verspätet werden. Durch das der Passage der ersten Projektionslinie A durch den Projektionspunkt der zweiten Lichtquelle entsprechende Trigger-Signal werden verzögerte Auslösezeitpunkte individuell verschieden für jede Lichtquelle derart festgelegt, dass die Bildpunkte der Lichtquellen zur Erzeugung von Druckpunkten auf der ersten Projektionslinie A zu liegen kommen. Beispielsweise wird somit die erste Lichtquelle nach dem Auslösen der zweiten Lichtquelle zum Zeitpunkt

$$t_1 = \frac{L1}{v}$$ ausgelöst. Analog werden verzögerte Auslösesignale für die anderen Lichtquellen erzeugt: Für die dritte Lichtquelle $t_3 = \frac{L3}{v}$ und für die vierte Lichtquelle

$$t_4 = \frac{L4'}{v}$$ nach dem Auslösezeitpunkt der zweiten Lichtquelle. In Konsequenz wird mittels Iteration für jede weitere Projektionslinie das gewünschte Feld von Druckpunkten, wie es in der entsprechend Figur 4 dargestellt ist, erzeugt.

Es bleibt noch zu erwähnen, dass für die Erzeugung verzögerter Auslösesignale die Verzögerungseinrichtung mit einer Signalfrequenz betrieben werden sollte, welche ein Vielfaches der Frequenz des ursprünglichen Ansteuerungssignals ist. Die Realisierung der Verschiebung durch verzögerte Ansteuerung erfolgt durch die Verzögerungseinrichtung, welche beispielsweise eine programmierbare Logik, ein ASIC, eine diskrete Elektronik oder dergleichen aufweist. Der Verzögerungselek-

tronik werden die Abstände $s_i$, wobei der Index i die Lichtquellen abzählt, und das Projektionsverhältnis k zwischen Gegenstandslinie und Projektionslinie in geeigneter Form, beispielsweise durch Speicherung in einer Speichereinheit zur Verfügung gestellt. Die Verzögerungseinrichtung kann aus diesen Angaben, der Geschwindigkeitskomponente v der Relativbewegung zwischen Druckform und Bebilderungseinrichtung bei bekanntem Geschwindigkeitsprofil der Druckform, beispielsweise einer gleichförmigen Bewegung, Startwerte für Zähler, welche jeweils einer Lichtquelle zugeordnet sind, bestimmen. Bei einer festen Taktfrequenz der Verzögerungseinrichtung verstreicht je nach Zählerstartwert ein bestimmtes Zeitintervall, bis auf Null zurückgezählt wurde, sodass eine verzögerte Auslösung der Ansteuerung der korrespondierenden Lichtquelle bei Erreichen des Null-Wertes des Zählers ausgelöst werden kann.

Für eine Bebilderungseinrichtung mit einer Anzahl von Lichtquellen, die in einer Gegenstandsebene liegen, können zu einer Gegenstandslinie in der Gegenstandsebene die Abstände $s_i$, wobei der Index i die Lichtquellen abzählt, im Rahmen einer Kalibrierung oder Vermessung bestimmt werden. Es ist klar in diesem Zusammenhang, dass die Abstände $s_i$ der Lichtquellen zu einer ersten Gegenstandslinie mit einfacher Arithmetik auf Abstände zu einer zweiten Gegenstandslinie umgerechnet werden können.

**Bezugszeichenliste**

| | |
|---|---|
| 10 | Bebilderungsmodul |
| 12 | Lichtquelle |
| 14 | Gegenstandslinie |
| 16 | Projektionslinie |
| 18 | Mittelpunkt |
| 24 | Lichtstrahl |
| 26 | Abbildungsoptik |
| 28 | Druckform |
| 210 | Bildpunkt |
| 212 | Kühlelement |
| 214 | Leitung zur Stromversorgung und Steuerung |
| 216 | Ansteuerungseinrichtung |
| 218 | Leitung zur Temperaturregelung |
| 220 | Temperaturregelung |
| 222 | Verzögerungseinrichtung |
| 224 | Verbindung zur Steuerung |
| 30 | Bebilderungsmodul |
| 32 | Laserstrahl |
| 34 | Abbildungsoptik |
| 35 | Symmetrieachse |
| 36 | Zylinder |
| 38 | Druckform |
| 310 | Bildpunkte |
| 312 | Weg der Bildpunkte |
| 314 | Verbindung zur Steuerungseinheit |
| 316 | Steuerungseinheit |
| 318 | Verzögerungseinrichtung |
| 320 | Ansteuerungseinrichtung |
| k | Projektionsverhältnis |
| s | Abstand zur Gegenstandslinie |
| h | Druckpunktabstand |
| v | Geschwindigkeitskomponente |
| A | erste Projektionslinie |
| B | zweite Projektionslinie |
| C | dritte Projektionslinie |
| D | vierte Projektionslinie |
| L1 | erster Versatz |
| L3 | dritter Versatz |
| L4 | vierter Versatz |
| L4' | vierter Restversatz |

**Patentansprüche**

1. Bebilderungseinrichtung mit einer Anzahl von Diodenlaserlichtquellen (12) auf einem Diodenlaserbarren zur Erzeugung von Bildpunkten (210) der Diodenlaserlichtquellen (12) in einer Projeklionslinie (16) einer Gegenstandslinie (14) in der durch die Diodenlaserlichtquellen definierten Ebene, auf einer Druckform (28), welche sich wenigstens mit einer Geschwindigkeitskomponente v senkrecht zu der durch die Gegenslandslinie (14) definierten Richtung und tangential zur Oberfläche der Druckform (28) bewegt, und mit einer Ansteuerungseinrichtung (216) zum Schalten jeder einzelnen Diodenlaserlichtquelle (12) auf dem Diodenlaserbarren, wobei der Ansteuerungseinrichtung (216) eine zeitliche Verzögerungseinrichtung (222) für die Ansteuerung der Diodenlaserlichtquellen, welche jeweils einen Abstand $s_i$, wobei der Index i die Diodenlaserlichtquellen (12) abzählt, zu der Gegenstandslinie (14) aufweisen, zugeordnet ist, wobei die zeitliche Verzögerungseinrichtung (222) den Auslösezeitpunkt der Ansteuerungseinrichtung (216) für jede Diodenlaserlichtquelle (12) in Abhängigkeit vom jeweiligen Abstand $s_i$ verschiebt.

2. Bebilderungseinrichtung gemäß einem der vorstehenden Ansprüche, wobei zusätzlich eine Abbildungsoptik (26) vorgesehen ist.

3. Bebilderungseinrichtung gemäß einem der vorstehenden Ansprüche, wobei die Druckform (28) auf einem Zylinder (36) aufgenommen ist und die Projektionslinie im Wesentlichen parallel zur Symmetrieachse (35) des Zylinders (36) verläuft.

4. Bebilderungseinrichtung gemäß einem der vorstehenden Ansprüche, wobei

die Geschwindigkeitskomponente v der Druckform (28,38) im Wesentlichen konstant ist und eine verzögerte Auslösung der anderen Diodenlaserlichtquellen (12) nach einer Zeitdauer $t_i$ mit $t_i = k\dfrac{s_i}{v}$, wobei k das Projektionsverhältnis zwischen Gegenstandslinie (14) und Projektionslinie (16) *bezeichnet,* erfolgt.

5. Verfahren zur Erzeugung von Bildpunkten (210) einer Anzahl von Diodenlaserlichtquellen (12) auf einem Diodenlaserbarren, welche jeweils einen Abstand $s_i$, wobei der Index i die Diodenlaserlichtquellen (12) abzählt, zu einer Gegenstandslinie (14) in der durch die Diodenlaserlichtquellen (12) definierten Ebene aufweisen, in einer Projektionslinie (16) der Gegenstandslinie (14) auf einer Druckform (28), welche wenigstens mit einer Geschwindigkeitskomponente v senkrecht zu der durch die Gegenstandslinie (14) definierten Richtung und tangential zur Druckformoberfläche bewegt, wobei jede einzelne Diodenlaserlichtquelle (12) auf dem Diodenlaserbarren mit einer Ansteuerungseinrichtung (216) an einem Auslösezeitpunkt der jeweiligen Diodenlaserquelle (12) geschaltet wird, wobei eine zeitliche Verzögerungseinrichtung (222) den Auslösezeitpunkt der Ansteuerungseinrichtung für jeden Diodenlaserlichtquelle in Abhängigkeit vom jeweiligen Abstand $S_i$ verschiebt, mit den Schritten:

   - Auslösen einer ersten Diodenlaserlichtquelle (12) an einem Zeitpunkt, wenn der Projektionspunkt auf der Projektionslinie (16) der Gegenstandslinie (14) zu liegen kommt, zur Erzeugung eines Bildpunktes
   - Auslösen einer zweiten Diodenlaserlichtquelle (12) zeitlich verzögert zum Zeitpunkt des Auslösens der ersten Diodenlaserlichtquelle (12) derart, dass auch der korrespondierende Projektionspunkt auf der Projektionslinie der Gegenstandslinie liegt, zur Erzeugung eines Bildpunktes
   - analoges Vorgehen für jede weitere Diodenlaserlichtquelle der Anzahl von Diodenlaserlichtquellen.

6. Verfahren zur Erzeugung von Bildpunkten (210) einer Anzahl von Diodenlaserlichtquellen (12) auf einem Diodenlaserbarren gemäß Anspruch 5, wobei die Verzögerungseinrichtung (222) relativ zum Auslösezeitpunkt einer ersten Diodenlaserlichtquelle (12), deren Projektionspunkt auf der Projektionslinie der Gegenstandslinie zu liegen kommt, so dass durch das Auslösen ein Bildpunkt (210) erzeugt wird, jede andere Diodenlaserlichtquelle zeitlich abweichend zum Auslösezeitpunkt der ersten Diodenlaserlichtquelle (12) derart schaltet, dass auch der zugehörige Bildpunkt (210) erzeugt wird, wenn der zugehörige Projektionspunkt der anderen Diodenlaserlichtquelle auf der Projektionslinie (16) der Gegenstandslinie (14) liegt.

7. Verfahren zur Erzeugung von Bildpunkten (210) einer Anzahl von Diodenlaserlichtquellen (12) auf einem Diodenlaserbanen gemäß Anspruch 5, wobei, wenn der Abstand des Projektionspunktes einer Diodenlaserlichtquelle (12) von der Projektionslinie (16) der Gegenstandslinie (14) größer als der n-fache Abstand h, wobei n eine natürliche Zahl ist, benachbarter Druckpunkte ist, die Ansteuerung der betreffenden Diodenlaserlichtquelle (12) mit der Bildinformation des durch besagte Diodenlaserlichtquelle (12) zu erzeugenden Druckpunktes, welcher den geringsten Abstand zur Projektionslinie (16) aufweist, erfolgt, und die Ansteuerungseinrichtung die besagte Diodenluserlichtquelle derart schaltet, dass im Verzögerungszeitintervall Punkte auf der Druckform im Wesentlichen die Strecke ($k s_i - nh$) zurückgelegt haben, wobei k das Projektionsverhältnis zwischen Gegenstandslinie (14) und Projektionslinie (16) beschreibt.

8. Durchformbelichter, der wenigstens eine Bebilderungseinrichtung gemäß einem der Ansprüche 1 bis 4 aufweist.

9. Druckwerk, das wenigstens eine Bebilderungseinrichtung gemäß einem der vorstehenden Ansprüche 1 bis 4 aufweist.

10. Druckmaschine mit einem Anleger, wenigstens einem Druckwerk und einem Ausleger, wobei die Druckmaschine wenigstens ein Druckwerk gemäß Anspruch 9 aufweist.

**Claims**

1. Imaging device including a number of diode laser light sources (12) on a diode laser bar for creating image dots (210) of the diode laser light sources (12) in a projection line (16) of an object line (14) in the plane defined by the diode laser light sources on a printing forme (28), which moves at least with a speed component v perpendicular to the direction defined by the object line (14) and tangential to the surface of the printing forme (28), and including an actuating device (216) for switching each individual diode laser light source (12) on the diode laser bar, the actuating device (216) being assigned a delaying device (222) for the actuation of the diode laser light sources, each of which is at a distance $s_i$ from the object line (14), with the index i counting the diode laser light sources (12), the delaying device (222) shifting the moment of actuation of the actuating device (216) for each diode laser light source (12) as a function of the respective distance $s_i$.

2. Imaging device according to one of the preceding claims,
   wherein in addition an imaging optics (26) is provided.

3. Imaging device according to one of the preceding claims,
   wherein the printing forme (28) is received on a cylinder and the projection line extends essentially parallel to the axis of symmetry (35) of the cylinder (36).

4. Imaging device according to one of the preceding claims,
   wherein the speed component v of the printing forme (28, 39) is essentially constant and wherein a delayed actuation of the other diode laser light sources (12) occurs after a period of time $t_i$, with $t_i = k \dfrac{s_i}{v}$,
   k being the projection ratio between object line (14) and projection line (16).

5. Method for creating image dots (210) of a number of diode laser light sources (12) on a diode laser bar, each of the diode laser light sources being at a distance $s_i$ from an object line (14) in the plane defined by the diode laser light sources (12), the index i counting the diode laser light sources (12), in a projection line (16) of the object line (14) on a printing forme (28), which moves at least with a speed component v perpendicular to the direction defined by the object line (14) and tangential to the printing forme surface, each individual diode laser light source (12) on the diode laser bar being switched by an actuating device (216) at an actuating instant of the respective diode laser source (12), a delaying device (222) shifting the actuating instant of the actuating device for each diode laser light source as a function of the respective distance $s_i$, including the steps of

   - actuating a first diode laser light source (12) at an instant at which the projection dot comes to lie on the projection line (16) of the object line (14) to create an image dot
   - actuating a second diode laser light source (12) with a time delay relative to the instant of actuation of the first diode laser light source (12) such that the corresponding projection dot likewise comes to lie on the projection line of the object line to create an image dot
   - proceeding in an analogous way for each further diode laser light source of the number of diode laser light sources.

6. Method for creating image dots (210) of a number of diode laser light sources (12) on a diode laser bar according to Claim 5,
   wherein the delaying device (222) switches each further diode laser light source relative to the instant of actuation of a first diode laser light source (12), whose projection dot comes to lie on the projection line of the object line so that an image dot (210) is created by the actuation, with a time deviation relative to the instant of actuation of the first diode laser light source (12), in a way that the associated image dot (210) is likewise created when the associated projection dot of the further diode laser light source lies on the projection line (16) of the object line (14).

7. Method for creating image dots (210) of a number of diode laser light sources (12) on a diode laser bar according to Claim 5,
   wherein, when the distance between the projection dot of a diode laser light source (12) from the projection line (16) of the object line (14) is greater than the n-fold of the distance h between adjacent printing dots, n being a natural number, the actuation of the relevant diode laser light source (12) occurs using the image information of that printing dot to be created by the said diode laser light source (12) that has the smallest distance from the projection line (16), and wherein the actuating device switches the said diode laser light source in such a way that in the delay period dots on the printing forme have essentially travelled through a distance ($ks_i$ - nh), with k describing the projection ratio between object line (14) and projection line (16).

8. Printing forme exposure device that includes at least one imaging device according to one of Claims 1 to 4.

9. Printing unit that includes at least one imaging device according to one of the preceding claims 1 to 4.

10. Printing press including a feeder, at least one printing unit and a delivery, wherein the printing press includes at least one printing unit according to Claim 9.

**Revendications**

1. Dispositif d'imagerie avec un nombre de sources lumineuses de laser diodes (12) sur une barre de diodes laser pour générer des points d'images (210) de la source lumineuse de diodes lasers (12) dans une ligne de projection (16) d'une ligne d'objet (14) dans le plan défini par les sources lumineuses de diodes laser sur une plaque d'impression (28) qui se déplace au moins à une composante de vitesse v perpendiculairement à la direction définie par la ligne d'objet (14) et tangentiellement à la surface de la plaque d'impression (28) et avec un dispositif de commande (216) pour l'activation de chaque source lumineuse de diodes laser (12) sur la barre de diodes laser, le dispositif de commande (216) étant associé à un dispositif de retardement temporel (222) pour la commande des sources lumineuses de diodes laser, qui présente respectivement une distance Si par rapport à la ligne d'objets (14), l'indice i comptant les sources lumineuse de diodes laser (12), le dispositif de retardement temporel (222) décalant le moment de déclenchement du dispositif de commande (216) pour chaque source lumineuse de diodes laser (12) en fonction de la distance respective $S_i$.

2. Dispositif d'imagerie selon l'une des revendications précédentes, une optique d'imagerie (26) étant prévue.

3. Dispositif d'imagerie selon l'une des revendications précédentes, la plaque d'impression (28) étant réceptionnée sur un cylindre (36) et la ligne de projection s'étendant essentiellement parallèlement à l'axe de symétrie (35) du cylindre (36).

4. Dispositif d'imagerie selon l'une des revendications précédentes, les composantes de vitesse v de la plaque d'impression (28, 38) étant sensiblement constantes et un déclenchement retardé des autres sources lumineuse de diodes laser (12) se produisant après une durée de temps $t_i$ avec

$$t_i = k\frac{S_i}{v},$$ k désignant le rapport de projection entre la ligne d'objets (14) et la ligne de projection (16).

5. Procédé pour la génération de points d'image (210) d'un nombre de sources lumineuses de diodes laser (12) sur une barre de diodes laser (12), sources qui présentent respectivement une distance Si, l'indice i comptant les sources lumineuses de diodes laser (12) par rapport à une ligne d'objet (14) dans le plan définie par la les sources lumineuses de diodes laser (12), dans une ligne de projection (16) de la ligne d'objet (14) sur une plaque d'impression (28), laquelle se déplace au moins à une composante de vitesse v perpendiculairement à la direction définie par la ligne d'objet (14) et tangentiellement à la surface de la plaque d'impression, chaque source lumineuse de diodes laser (12) étant activée sur la barre de diodes laser avec un dispositif de commande (216) sur un moment de déclenchement de la source de diodes laser (12), un dispositif temporel de retardement (222) déplaçant le moment de déclenchement du dispositif de commande pour chaque source lumineuse de diodes laser en fonction de la distance respective Si, comprenant les étapes suivantes :

- déclenchement d'une première source lumineuse de diodes laser (12) à un moment quand le point de projection vient s'appliquer sur la ligne de projection (16) de la ligne d'objet (14), pour la génération d'un point d'image
- déclenchement d'une seconde source lumineuse de diodes laser (12) retardé au moment du déclenchement de la première source lumineuse de diodes laser (12) de sorte que le point de projection correspondant se trouve sur la ligne de projection de la ligne d'objets, pour la génération d'un point d'image
- avance analogique pour chaque source supplémentaire lumineuse de diodes laser du nombre de sources lumineuses de lasers diodes.

6. Procédé pour la génération de points d'image (210) d'un nombre de sources lumineuse de diodes laser (12) sur une barre de diodes laser selon la revendication 5, le dispositif de retardement (222) activant de manière relative par rapport au moment de déclenchement d'une première source lumineuse de diodes laser (12), dont le point de projection vient s'appliquer sur la ligne de projection de la ligne d'objet, de sorte que par le déclenchement, il est généré un point d'image (210), chaque autre source lumineuse de diodes laser différée dans le temps du moment de déclenchement de la première source lumineuse de diodes laser (12) de sorte qu'également le point d'image (210) respectif est généré quand le point de projection respectif de l'autre source lumineuse de diodes laser se trouve sur la ligne de projection (16) de la ligne d'objet (14).

7. Procédé pour la génération de points d'image (210) d'un nombre de sources lumineuses de diodes laser (12) sur une barre de diodes laser selon la revendication 5, quand la distance du point de projection d'une source lumineuse de diodes laser (12) à la ligne de projection (16) de la ligne d'objets (14) est plus grande qu'une distance n-multiple h de points d'impression voisins, n étant un nombre naturel, la commande de la source lumineuse concernée de diodes laser (12) s'effectuant avec l'information d'image du point d'impression à générer par ladite source lumineuse de diodes laser (12), point qui présente la distance la plus faible à la ligne de projection (16), et le dispositif de commande déclenchant ladite source lumineuse de diodes laser de sorte que dans l'intervalle de différé, des points ont parcouru sur la plaque d'impression sensiblement le trajet (K Si - nh), k décrivant le rapport de projection entre la ligne d'objets (14) et la ligne de projection (16).

**8.** Insoleuse pour plaque d'impression, qui présente au moins un dispositif d'imagerie selon l'une des revendications 1 à 4.

**9.** Groupe d'impression, qui présente au moins un dispositif d'imagerie selon l'une des revendications 1 à 4.

**10.** Machine d'impression avec un margeur, au moins un groupe d'impression et une réception, la machine d'impression présentant au moins un groupe d'impression selon la revendication 9.

Fig.1

EP 1 259 060 B1

Fig.2

Fig.3

Fig.4

Fig.5

Fig.6

Fig.7

**EP 1 259 060 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1168813 A2
- US 5900981 A
- US 6044096 A
- US 15174205 B
- US 5163368 B1
- DE 2653539
- DE 19602307 A1
- US 6201596 B
- EP 0878773 A2